# EUROPÄISCHE PATENTSCHRIFT

(11) **EP 0 717 763 B1**
(45) Veröffentlichungstag und Bekanntmachung des Hinweises auf die Patenterteilung: **28.04.1999**
(21) Anmeldenummer: 95924841.0
(22) Anmeldetag: 10.07.1995
(51) Int. Cl.: C09K 9/02, G02B 5/23, G02C 7/10

(54) **PHOTOCHROM EINGEFÄRBTER GEGENSTAND**
PHOTOCHROMICALLY TINTED OBJECTS
OBJET TEINTE PAR PROCEDE PHOTOCHROMIQUE

(30) Priorität: 10.07.1994 DE 4423904
(43) Veröffentlichungstag der Anmeldung: 26.06.1996
(73) Patentinhaber: Optische Werke G. Rodenstock, 80469 München (DE)
(72) Erfinder: MELZIG, Manfred, D-82234 Wessling (DE)
(74) Vertreter: Münich, Wilhelm, Dr.
(86) Internationale Anmeldenummer: DE9500888
(87) Internationale Veröffentlichungsnummer: WO9601883

(56) Entgegenhaltungen:
- EP-A- 0 050 594
- EP-A- 0 432 841
- DE-A- 4 422 663
- US-A- 4 043 637

## Beschreibung

### Technisches Gebiet

Die Erfindung bezieht sich auf einen photochrom eingefärbten Gegenstand aus einem Kunststoffmaterial.

### Stand der Technik

Es ist bekannt, Gegenstände aus einem Kunststoffmaterial, wie beispielsweise Brillengläser, mit einer oder mehreren photochromen Substanzen einzufärben, um eine lichtabhängige Eindunkelung zu erreichen.

Die bekannten photochromen Substanzen sind so "aufgebaut", daß sie eine lichtabhängige Eindunkelung nur dann zeigen, wenn sie mit UV-Licht bestrahlt werden. Durch die Bestrahlung mit UV-Licht ändern sie nämlich ihre Struktur, beispielsweise "öffnet" sich bei Spiro-Verbindungen das Molekül im sogenannten Spiro-Zentrum.

Anders ausgedrückt müssen die bekannten photochromen Substanzen erst mit UV-Licht angeregt werden, um eine Absorption im sichtbaren Bereich des Spektrums zu zeigen. Das Absorptionsmaximum der nicht angeregten Form liegt bei den bekannten und bislang praktisch angewandten Substanzen ausnahmslos unterhalb 400 nm.

Werden nun beispielsweise Brillengläser mit derartigen photochromen Substanzen eingefärbt, so dunkeln diese Gläser auch bei noch so hellem Licht nicht ein, wenn diesem der UV-Anteil fehlt. Dies ist beispielsweise der Fall beim Autofahren oder bei Inversionswetterlagen in Großstädten, da durch den UV-Absorber in der PVB-Folie der Verbundglas scheiben oder durch atmosphärische Verunreinigungen der UV-Anteil des Lichts, d.h. der Anteil des Lichts ausgefiltert wird, durch den die Substanzen aus dem nicht angeregten in den angeregten Zustand überführt werden, in dem sie im sichtbaren Bereich absorbieren.

Umgekehrt dunkeln sich mit derartigen Substanzen eingefärbte Brillengläser zu stark ein, wenn bei reduziertem Licht im sichtbaren Bereich ein vergleichsweise hoher UV-Anteil vorhanden ist, wie dies beispielsweise bei Nebel im Hochgebirge der Fall ist.

Damit weisen die bekannten und bisher praktisch zu Anwendung kommenden Substanzen den Nachteil auf, daß sie in einer Reihe von Fällen nicht entsprechend der tatsächlichen Helligkeit, d.h. der Lichtintensität im sichtbaren Bereich des Spektrums eindunkeln.

Zwar sind aus der GB-PS 1 413 544 photochrome Filter bekannt, die auch in Sonnenschutzgläsern, wie z.B. Skibrillen verwendet werden können und die aufgrund der Einfärbung mit Metall-Dithizonaten durch Anregung mit Licht des sichtbaren Wellenlängenbereichs eindunkeln.

Diese photochromen Filter sind jedoch aufgrund der im nichtangeregten Zustand schon bestehenden Einfärbung der Metall-Dithizonate nur für beschränkte Anwendungen geeignet. Sie weisen im nichtangeregten Zustand nur eine Transmission von 25 % des sichtbaren Lichts auf. Damit wäre eine Anwendung beispielsweise als Autofahrerbrille in der Dämmerung ausgeschlossen, da diese niedrige Transmission im Straßenverkehr nicht den Sicherheitsbestimmungen entspricht. Desweiteren besitzen sie im Grundzustand eine starke gelbe Einfärbung, die die Anwendungsbereiche weiter einschränkt. So würde beispielsweise eine gemäß der Figur 3 der GB-PS 1 413 544 absorbierende Brille der erforderlichen Signallichtempfindlichkeit nicht genügen, da blaues und grünes Licht, wie z.B. das Licht von Verkehrsampeln oder Polizeilicht durch die Absorptionseigenschaften des Metalldithizonats im entsprechenden Wellenlängenbereich nicht erkennbar wären.

### Darstellung der Erfindung

Der Erfindung liegt die Aufgabe zugrunde, einen photochrom eingefärbten Gegenstand anzugeben, der nicht nur die vorteilhaften Eigenschaften der bekannten, zur Einfärbung verwendeten Spirooxazine und Spiropyrane besitzt, sonder der auch eine vom UV-Anteil des Anregungslichts unabhängige Eindunkelung aufweist und auch dann einen photochromen Effekt zeigt, wenn das Licht nur einen geringen oder keinen UV-Anteil hat.

Erfindungsgemäß wird diese Aufgabe durch einen Gegenstand aus einem Kunststoffmaterial gelöst, das mit wenigstens einer photochromen Substanz eingefärbt ist, die sowohl durch Licht des sichtbaren Spektralbereichs, als auch durch Licht im UV-Bereich des Spektrums angeregt wird, und die im angeregten Zustand eine, nach der spektralen Hellempfindlichkeit des menschlichen Auges bewertet, höhere Absorption im Wellenlängenbereich von 450-650 nm durch Hyperchromie und/oder Batho- bzw. Hypsochromie als im nicht angeregten Zustand aufweist, wobei zusätzlich wenigstens ein UV-absorbierendes Material in einer Konzentration eingebracht ist, so daß die Eindunkelung der photochromen Substanz(en) unabhängig vom UV-Anteil des Anregungslichts ist.

Hierzu werden beispielsweise Farbstoffe mit hochkondensierten aromatischen oder heteroaromatischen Ringsystemen und/oder ausgedehnten π-Elektronensystemen verwendet, die entsprechende auxo- oder bathochrom wirkende Substituenten aufweisen können und aufgrund ihrer molekularen Struktur sowohl in der nichtangeregten, als auch in der angeregten Form auch im sichtbaren Spektralbereich absorbieren.

Ohne Bedeutung ist hierbei, ob das relative Absorptionsmaximum unter Anregung zum längerwelligen oder zum kürzerwelligen Bereich hin verschoben wird, solange beide Maxima im sichtbaren Spektralbereich liegen. Entscheidend für die Eindunkelung ist nämlich, daß die prozentuale Absorption, d.h. der über V_{λ} integrierte molare Absorptionskoeffizient, des Farbstoffs oder der Farbstoffmischung für die lichtangeregten Formen größer ist als im Grundzustand.

Erfindungsgemäß werden damit Gegenstände angegeben, die Farbstoffe aufweisen, die sowohl im belichteten als auch im unbelichteten Zustand vor allem im sichtbaren Spektralbereich absorbieren und deren Eindunkelungsintensität von der Helligkeit, d.h. der über die spektrale Hellempfindlichkeit des menschlichen Auges V_{λ} integrierten Intensität, und nicht von der Intensität des UV-Anteils des Umgebungslichts abhängt.

Die Unabhängigkeit der Eindunkelungsreaktion von der Intensität des UV-Anteils des Umgebungslichts wird vor allem dadurch erreicht, daß andere als die üblicherweise in Brillengläsern zum Schutz des Kunststoffmaterials gegen Vergilbung und Versprödung eingesetzten UV-Absorber verwendet werden.

Dies sind insbesondere UV-Absorber, deren Absorption sich bis in den sichtbaren Wellenlängenbereich erstreckt, wobei vor allem in 3-Stellung phenylsubstituierte Acrylate, wie beispielsweise das Cyanacrylsäureethylesterderivat mit folgender Formel: 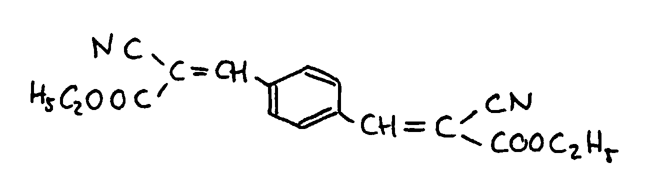 bevorzugt sind. Auch 2,2',4,4'-Tetrahydroxybenzophenon ("UVinol D 49") weist diese Eigenschaften auf.

Diese Absorber werden in Konzentrationen von 300-2000 ppm in Abhängigkeit vom eingesetzten Kunststoffmaterial verwendet. Diese Konzentrationangabe ist - wie alle folgenden Angaben - eine Gewichtsangabe bezogen auf das Gewicht des Gegenstands.

Des weiteren sind zur erfindungsgemäßen Lösung der gestellten Aufgabe die längerwellig absorbierenden Benzotriazole ("Tinuvine") geeignet, die in Konzentrationen von 0,5-2 % eingesetzt werden.

Das Merkmal, daß durch ausgewählte UV-Absorber eine UV-unabhängige Eindunkelung erreicht wird, ist besonders vorteilhaft, da der UV-Anteil des Lichts nicht zwingend mit der Helligkeit korreliert, wie die anfangs angegebenen Beispiele zeigen.

Die erfindungsgemäßen photochrom eingefärbten Gegenstände weisen nämlich typischerweise auch im UV-Bereich starke Absorptionsbanden auf, so daß ohne UV-Absorber bei gleicher Helligkeit des Lichts im sichtbaren Bereich die Eindunkelung in Abhängigkeit vom UV-Anteil des Lichts zunehmen würde. Anders ausgedrückt, wäre beispielsweise bei einer Auslegung der Eindunkelungs-Eigenschaften für die Benutzung der Brille im Auto die Eindunkelung im Freien aufgrund des UV-Anteils des Lichts "zu stark" und umgekehrt.

Durch den erfindungsgemäß in entsprechender Menge zugesetzten UV-Absorber wird dagegen erreicht, daß die Eindunkelungsintensität der erfindungsgemäß eingefärbten Gegenstände von der Helligkeit, d.h. der über die spektrale Hellempfindlichkeit des menschlichen Auges V_{λ} integrierten Intensität, und nicht von der Intensität des UV-Anteils des Umgebungslichts abhängt.

Darüber hinaus wird durch den Einsatz der beschriebenen UV-Absorber die Gebrauchsdauer der Kunststoffgegenstände deutlich verlängert, da der durch den UV-Absorber herausgefilterte hochenergetische Anteil des Lichts - über photochemische Nebenreaktionen - zur Schädigung der Farbstoffe führen würde.

Der erfindungsgemäß verwendete UV-Absorber kann nach den üblichen Verfahren in das Kunststoffmaterial selbst oder zumindest auf die dem Lichteinfall zugewandte Seite des Kunststoffgegenstands ein- bzw. als Schicht oder in einer zusätzlichen Beschichtung aufgebracht werden.

Das Einbringen der photochromen Farbstoffe und des UV-Absorbers kann entweder unabhängig voneinander oder gemeinsam nach bekannten Verfahren durchgeführt werden:

Nur exemplarisch seien für das Einbringen des oder der photochromen Farbstoffe in das Monomer die EP-A-0 227 337 und für das nachträgliche Einbringen von Farbstoff und UV-Absorber in das Polymer die DE-A-3 607 759 genannt. Das Einbringen des oder der UV-Absorber kann in der gleichen Weise wie das Einbringen der Farbstoffe erfolgen.

### Kurze Beschreibung der Zeichnungen

Die Erfindung wird nachstehend anhand eines Ausführungsbeispiels unter Bezugnahme auf die Zeichnungen näher beschrieben. Es zeigen:
- Fig. 1: ein Beispiel für das Absorptionsverhalten eines erfindungsgemäß eingefärbten Gegenstandes bzw. der zur Einfärbung verwandten Farbstoffe im unbelichteten Zustand, und
- Fig. 2: das Absorptionsverhalten dieses Gegenstandes bzw. der zur Einfärbung verwandten Farbstoffe im belichteten Zustand.

### Beschreibung von Ausführungsbeispielen

In den Figuren ist jeweils die Absorption in Prozent der einzelnen Farbstoffe und die Gesamtabsorption als Funktion der Wellenlänge des Lichts im sichtbaren Bereich aufgetragen.

Zur Herstellung des Gegenstandes werden 100 g einer Gießharzmischung, die 40 % Diethylenglykoldiacrylat, 25 % Diethylenglykoldimethacrylat, 30 % Triethylenglykoldiacrylat und 5 % höhere Oligomere des Ethylenglykoldiacrylats enthält, mit 0,035 g einer photochromen Farbstoffmischung und 0,050 g 2,2',4,4'-Tetrahydroxybenzophenon vermischt. Nach Zugabe von 1,5 g eines Initiators (tert.-Butylperneodecanoat) wird die Mischung in Gießformen für Plangläser gefüllt. Diese werden zur Polymerisation 44 h in ein Wasserbad gestellt, in dem die Temperatur von 20 °C bis auf 80 °C langsam ansteigt. Anschließend erfolgt die Abkühlung der Formen innerhalb 1 h auf ca. 60 °C. Nach dem Entformen werden die Plangläser noch 50 min bei 115 °C getempert, um die Gegenstände vollständig auszuhärten und eventuelle Spannungen zu beseitigen.

Die erfindungsgemäß verwendete photochrome Farbstoffmischung enthält die drei Farbstoffe A, B und C. Diese werden so ausgewählt, daß die Gesamtabsorption im unbelichteten Zustand das Brillenglas braun und im belichteten Zustand das Brillenglas "braungrau" erscheinen läßt.

Als Farbstoff A wird 1,3,3-Triethyl-5-methoxy-6'-piperidino-spiroindolino-2,3'-(3H)anthra[2,1-b]oxazin mit nachfolgender Struktur verwendet:

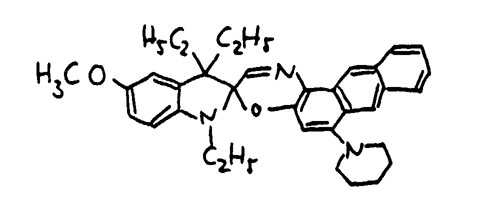

Für Farbstoff B wird 1,3,3-Triethyl-5-dimethylaminospiroindolino-2,3'-(3H)peryleno[3,2-b]oxazin 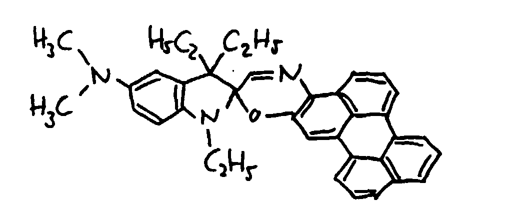 eingesetzt.

Farbstoff C ist ebenfalls ein Spirooxazin oder ein substituiertes Diarylnaphthopyran, das jedoch invers photochrome Eigenschaften aufweist. Das bedeutet, daß die Verbindung im thermodynamischen Gleichgewicht großteils in der längerwellig absorbierenden, ringoffenen Form vorliegt und bei Belichtung durch Energieaufnahme in die kürzerwellig absorbierende, geschlossene Form übergeht.

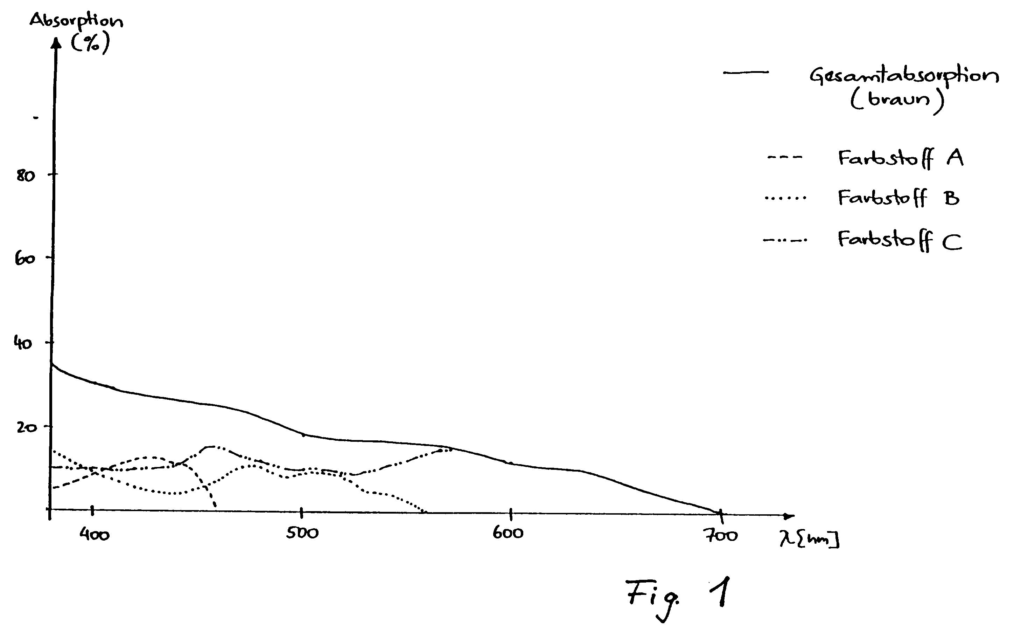

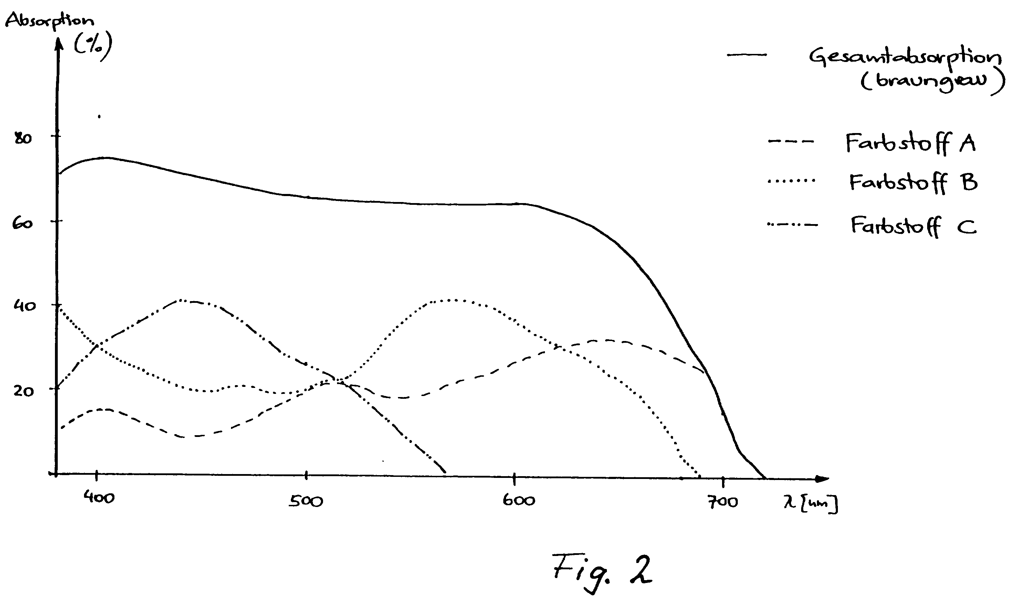

Wie ein Vergleich der Figuren 1 und 2 zeigt, werden die Absorptionmaxima der Farbstoffe A und B durch die Anregung durch Licht im sichtbaren Bereich zu längeren Wellenlängen hin verschoben, während der Farbstoff C eine Verschiebung zum kürzerwelligen Bereich zeigt.

Insbesondere ist aus den Figuren ersichtlich, daß die Eindunkelungsintensität von der Helligkeit abhängt, d.h. der über die spektrale Hellempfindlichkeit des menschlichen Auges V_{λ} integrierten Intensität.

Ausdrücklich soll festgehalten werden, daß durch das vorstehende Beispiel die Anzahl der Farbstoffe und der Kunststoffmaterialien nicht beschränkt ist, ebensowenig gibt es Einschränkungen bezüglich der Maximum-Verschiebung und des Spektralbereichs innerhalb des sichtbaren Lichts.

Durch die Auswahl und die Kombination der Einzelfarbstoffe wird den individuellen Wünschen nach der Farbe des Kunststoffgegenstandes im aufgehellten bzw. eingedunkelten Zustand Rechnung getragen.

## Patentansprüche

1. Gegenstand aus einem Kunststoffmaterial, das mit wenigstens einer photochromen Substanz eingefärbt ist, die durch Licht im sichtbaren Bereich des Spektrums aus dem nicht angeregten Zustand in den angeregten Zustand überführt wird, in dem sie Licht im sichtbaren Bereich des Spektrums absorbiert,
dadurch **gekennzeichnet**, daß die photochrome Substanz bzw. die photochromen Substanzen Substanzen sind, die auch durch Licht im UV-Bereich des Spektrums angeregt werden, und die im angeregten Zustand eine, nach der spektralen Hellempfindlichkeit des menschlichen Auges bewertet, höhere Absorption im Wellenlängenbereich von 450-650 nm durch Hyperchromie und/oder Batho- bzw. Hypsochromie als im nicht angeregten Zustand aufweisen, und
daß zusätzlich wenigstens ein UV-absorbierendes Material in einer Konzentration eingebracht ist, daß die Eindunkelung der photochromen Substanz(en) unabhängig vom UV-Anteil des Anregungslichts ist.

2. Gegenstand nach Anspruch 1,
dadurch **gekennzeichnet**, daß zur Einfärbung Einzelfarbstoffe und/oder Mischungen von mindestens zwei Substanzen eingesetzt werden.

3. Gegenstand nach Anspruch 1 oder 2,
dadurch **gekennzeichnet**, daß die zur Einfärbung verwendeten Farbstoffe hochkondensierte aromatische oder heteroaromatische Ringsysteme und/oder ausgedehnte π-Systeme aufweisen.

4. Gegenstand nach einem der Ansprüche 1 bis 3,
dadurch **gekennzeichnet**, daß diese Systeme jeweils entsprechende, auxochrom wirkende Substituenten aufweisen.

5. Gegenstand nach einem der Ansprüche 1 bis 4,
dadurch **gekennzeichnet**, daß der Gegenstand das oder die UV-absorbierenden Materialien in seinem gesamten Volumen enthält.

6. Gegenstand nach einem der Ansprüche 1 bis 4,
dadurch **gekennzeichnet**, daß der UV-Absorber nachträglich mindestens bei der Seite, durch die das Anregungslicht einfällt, in oder auf den Gegenstand oberflächennah ein- bzw. aufgebracht wird.

7. Gegenstand nach einem der Ansprüche 1 bis 6,
dadurch **gekennzeichnet,** daß der Gegenstand ein Brillenglas ist.

## Claims

1. Object made of a synthetic material, which is tinted with at least one photochromic substance which is converted by light in the visible region of the spectrum from the non-excited state into the excited state in which it absorbs light in the visible region of the spectrum,
**characterised in that** the photochromic substance or the photochromic substances are substances which are also excited by light in the UV region of the spectrum, and which in the excited state have, evaluated according to the spectral luminosity of the human eye, higher absorption in the wavelength range of 450 - 650 nm through hyperchromism and/or batho- or hypsochromism than in the non-excited state, and that in addition at least one UV-absorbing material is introduced in a concentration such that the darkening of the photochromic substance(s) is not dependent on the UV content of the excitation light.

2. Object according to claim 1, **characterised in that** individual colouring agents and/or mixes of at least two substances are used for the tinting.

3. Object according to claim 1 or 2, **characterised in that** the colouring agents used for the tinting have highly condensed aromatic or heteroaromatic ring systems and/or extended π-systems.

4. Object according to one of claims 1 - 3, **characterised in that** these systems have in each case corresponding substituents acting auxochromically.

5. Object according to one of claims 1 - 4, **characterised in that** the object contains the UV-absorbing material or materials in its total volume.

6. Object according to one of claims 1 - 4, **characterised in that** the UV-absorber is introduced or applied subsequently at least on the side through which the excitation light shines, into or onto the object close to its surface.

7. Object according to one of claims 1 - 6, **characterised in that** the object is a spectacle lens.

## Revendications

1. Objet en une matière synthétique, qui est teinté avec au moins une substance photochromique qui passe, sous l'effet de la lumière dans la région visible du spectre, de l'état non excité à l'état excité dans lequel elle absorbe de la lumière dans la région visible du spectre,
caractérisé en ce que la substance photochromique ou les substances photochromiques sont des substances qui sont aussi excitées par de la lumière dans la région UV du spectre, et qui présentent à l'état excité une plus forte absorption, évaluée d'après la photosensibilité spectrale de l'oeil humain, dans la région de longueurs d'ondes de 450 à 650 nm, par hyperchromie et/ou bathochromie ou hypsochromie, que dans l'état non excité, et en ce que
en supplément, au moins une matière absorbant les rayons ultraviolets est incorporée à une concentration telle que le foncement de la substance ou des substances photochromiques est indépendant de la composante UV de la lumière d'excitation.

2. Objet suivant la revendication 1, caractérisé en ce qu'on utilise pour produire la teinte des colorants individuels et/ou des mélanges d'au moins deux substances.

3. Objet suivant la revendication 1 ou 2, caractérisé en ce que les colorants utilisés pour produire la teinte présentent des systèmes de noyaux aromatiques ou hétéroaromatiques fortement condensés et/ou des systèmes à électrons π étendus.

4. Objet suivant l'une des revendications 1 à 3, caractérisé en ce que ces systèmes présentent chacun des substituants correspondants à effet auxochrome.

5. Objet suivant l'une des revendications 1 à 4, caractérisé en ce qu'il contient la ou les matières absorbant les rayons ultraviolets dans son volume total.

6. Objet suivant l'une des revendications 1 à 4, caractérisé en ce que l'absorbeur de rayons ultraviolets y est incorporé près de sa surface ou est appliqué sur lui à un stade extérieur au moins du côté par lequel tombe la lumière incidente d'excitation.

7. Objet suivant l'une des revendications 1 à 6, caractérisé en ce que l'objet est un verre de lunettes.
